# FASCICULE DE BREVET EUROPEEN

(11) **EP 3 828 081 B1**
(45) Date de publication et mention de la délivrance du brevet: **17.05.2023**
(21) Numéro de dépôt: 20200177.2
(22) Date de dépôt: 06.10.2020
(51) Int. Cl.: B64C 27/00, G06T 7/246, G01B 11/04

(54) **PROCEDE ET DISPOSITIF D'EVALUATION D'UN ECART DE HAUTEURS ENTRE AU MOINS DEUX PALES D'UN ROTOR, ET PROCEDE D'EQUILIBRAGE**
VERFAHREN UND VORRICHTUNG ZUR ABSCHÄTZUNG DES HÖHENUNTERSCHIEDS ZWISCHEN ZWEI ROTORBLÄTTERN EINES ROTORS, UND AUSWUCHTVERFAHREN
METHOD AND DEVICE FOR ASSESSING A DIFFERENCE IN HEIGHT BETWEEN AT LEAST TWO BLADES OF A ROTOR, AND METHOD FOR BALANCING

(30) Priorité: 28.11.2019 FR 1913356
(43) Date de publication de la demande: 02.06.2021
(73) Titulaire: Airbus Helicopters, 13725 Marignane Cedex (FR)
(72) Inventeur: JOUVE, Jérémy, 13560 SENAS (FR)
(74) Mandataire: GPI Brevets

(56) Documents cités:
- EP-A1- 3 025 958
- GB-A- 1 116 748
- KR-B1- 101 600 424

## Description

La présente invention concerne un procédé et un dispositif d'évaluation d'un écart de hauteurs entre au moins deux pales d'un rotor muni d'une pluralité de pales, et notamment d'un rotor d'un giravion par exemple. Par exemple, ce procédé est mise en oeuvre dans le cadre d'un procédé d'équilibrage du rotor.

En effet, le rotor de sustentation d'un giravion, et éventuellement de propulsion dans le cas d'un hélicoptère, comporte une pluralité de pales.

A l'issue de leur fabrication, les pales présentent des écarts en termes de répartition massique et de caractéristiques aérodynamiques. Les différentes tolérances de fabrication peuvent être réduites, mais des écarts peuvent subsister d'une pale à l'autre.

Les différences de fabrication entres les pales d'un même rotor peuvent conduire à des comportements qui diffèrent d'une pale à l'autre lorsque les pales sont montées sur le rotor. En particulier, des pales légèrement différentes vont produire des portances qui elles-aussi diffèrent. Deux pales d'un même rotor peuvent alors générer deux portances différentes à un même azimut et avec un même angle de pas. Le rotor n'est alors pas parfaitement équilibré.

De plus, le remplacement d'équipements du rotor peut aussi conduire à un déséquilibrage. A titre d'exemple, remplacer un amortisseur usagé peut induire un déséquilibrage du rotor.

Des ajustements sont alors entrepris pour équilibrer le rotor lors d'opérations régulières de maintenance et de réglage.

L'équilibrage d'un rotor peut être réalisé en ajustant divers paramètres.

Ainsi, les pales peuvent être pourvues de petits « volets » compensateurs, dénommés « tab » par l'homme du métier, sur leur bord de fuite. Toute modification du calage d'un tel volet par rapport au profil aérodynamique de la pale génère une force qui modifie la portance de la pale. En ajustant le calage des tabs, il est possible de réaliser un équilibrage aérodynamique de chaque pale. Cet ajustement peut être réalisé en braquant manuellement au moins un tab d'un angle approprié pour compenser des écarts de portance entre deux pales.

De manière complémentaire ou alternative, des éléments pesants peuvent être utilisés pour ajuster la masse de la pale et/ou la position de son centre de gravité.

De manière complémentaire ou alternative, la longueur d'une bielle de pas commandant le pas d'une pale peut être ajustée. L'allongement ou le raccourcissement d'une bielle de pas peut induire une augmentation ou une réduction de la portance générée par la pale.

Pour déterminer si la portance d'une ou plusieurs pales doit être ajustée, la portance exercée sur chaque pale peut être mesurée. Toutefois, un tel procédé s'avère très complexe.

Dès lors d'autres systèmes réalisent des mesures indirectes de cette portance.

Le document FR 2871438 B1 décrit un procédé pour régler un rotor déficient à l'aide d'un réseau de neurones. Ce procédé détermine les réglages à effectuer notamment en fonction d'accélérations.

D'autres systèmes de mesures indirectes visent à évaluer la hauteur de chaque pale lors de sa rotation, cette hauteur étant une image de la portance générée par la pale à quelques approximations près. Ces systèmes peuvent aussi permettre de visualiser la trajectoire d'une pale en rotation. Les mesures peuvent être effectuées au sol et en vol, les ajustements pouvant notamment être choisis en fonction de la phase de vol pendant laquelle un écart a été relevé. Par exemple, si des mesures réalisées en vol en palier signalent des écarts de hauteurs, un opérateur peut utiliser les tabs pour régler le rotor. De plus, si des mesures réalisées en vol stationnaire signalent des écarts de hauteurs, un opérateur peut utiliser les bielles de pas pour régler le rotor.

Un système de mesure indirecte de la portance peut comprendre des lampes stroboscopiques synchronisées sur le régime rotor ainsi que des petites cibles réfléchissantes disposées sur les pales pour visualiser la trajectoire des pales. Par exemple, chaque cible peut prendre une forme d'un carré, d'un rond, d'un triangle et peut être contenue dans un carré de moins de deux centimètres de coté pour avoir une taille aussi petite que possible.

Un autre système de mesure indirecte de la portance peut comprendre des caméras dédiées synchronisées sur le régime rotor pour synchroniser la prise d'images avec le passage des pales et par exemple avec des lampes stroboscopiques.

Un autre système de mesure indirecte de la portance peut comprendre un capteur de hauteur, par exemple de type capteur à ultrasons, associé à un déclenchement synchronisé avec le régime rotor.

Les réglages adéquats peuvent être déterminés par un opérateur en utilisant des abaques fournissant les ajustements à réaliser en fonction des écarts de hauteurs relevés et de la phase de vol.

Ces systèmes à stroboscope, caméra ou capteurs de hauteur sont intéressants mais nécessitent d'être synchronisés avec le régime rotor pour visualiser chaque pale. Une telle synchronisation peut être réalisée à l'aide d'un capteur magnétique agencé dans un repère non tournant et d'un pointeur magnétique solidaire en rotation du rotor. Par exemple, un capteur magnétique est agencé sur un plateau non tournant d'un ensemble de plateaux cycliques pour détecter le passage d'un organe en métal agencé au contraire sur le plateau tournant de cet ensemble de plateaux cyclique. Pour notamment permettre des mesures en vol, des câbles doivent alors cheminer du capteur magnétique jusqu'à la caméra ou aux capteurs de hauteur voire aux lampes stroboscopiques présents par exemple dans la cabine ce qui s'avère délicat sur un aéronef.

Bien qu'efficaces, ces systèmes demeurent donc complexes avec l'installation de moyens de mesure dans un repère tournant. L'agencement dans un repère tournant de moyens de mesure devant éventuellement être reliés à des systèmes présents dans une cabine peut s'avérer onéreux en raison du temps d'installation et d'immobilisation de l'aéronef. De plus, ces systèmes imposent de réaliser un vol technique.

Le document KR 101600424 est connu. Ce document suggère de prendre des photographies d'extrémités de pales colorées.

Les documents GB1116748 et EP3025958 sont aussi connus.

La présente invention a alors pour objet de proposer un procédé visant à être simple et utilisable en vol sans nécessiter l'agencement d'équipements complexes et câblés sur un rotor et notamment sans nécessiter une synchronisation avec le régime rotor.

L'invention vise ainsi un procédé notamment pour évaluer au moins un écart de hauteurs entre des pales d'un rotor comprenant une pluralité de pales en rotation pour équilibrer le rotor, et par exemple entre les extrémités libres des pales. Ce procédé comporte au moins les étapes suivantes :
- à l'aide d'un capteur d'images, enregistrement d'images sources successives dans un espace traversé par lesdites pales en rotation durant une période de mesure,
- détermination pour chaque pale avec un calculateur d'une courbe de tendance de la trajectoire de cette pale dans ledit espace en fonction de positions successives d'un point caractéristique de cette pale à l'aide de chaque image source contenant cette pale,
- évaluation d'au moins un écart moyen entre une courbe de tendance et chaque autre courbe de tendance ledit écart de hauteurs étant égal audit écart moyen, à savoir étant l'image dudit écart moyen.

Dès lors, pour équilibrer le rotor au moins un réglage du rotor peut être déterminé en fonction de chaque écart moyen déterminé, soit automatiquement par le calculateur soit par exemple par un opérateur utilisant des abaques établis par essais, simulations et/ou calculs. Dès lors, le rotor est modifié selon ledit au moins un réglage.

Chaque courbe de tendance peut aussi être affichée sur un écran.

La fréquence d'acquisition d'images à l'aide du capteur d'images et la fréquence de rotation des pales ne sont éventuellement pas synchronisées entre elles. La fréquence d'acquisition d'images à l'aide du capteur d'images est usuellement dénommée « taux de rafraichissement ». Il est néanmoins possible d'acquérir des images et d'identifier les pales sur les images sans une telle synchronisation.

En effet, le capteur d'images peut acquérir en continu des images sources, et non pas à une fréquence synchronisée sur la fréquence de rotation du rotor. Le capteur d'images peut être configuré pour acquérir en continu des images sources, sur une période de mesure, suivant le taux de rafraichissement de ce capteur d'images.

Un capteur d'images peut ainsi acquérir suffisamment d'images sources de toutes les pales dans le champ de vision du capteur d'images durant une période de mesure relativement faible afin d'évaluer des différences de hauteurs utiles par exemple pour établir une mesure indirecte de la portance des pales.

Ainsi, selon le procédé des images sources sont prises avec le capteur d'images. Certaines images sources ne contiennent pas une pale et certaines images sources contiennent au moins une partie d'une pale, et par exemple une partie de l'extrémité d'une pale. A titre illustratif, avec un capteur d'images ayant un taux de rafraichissement de 240 images par seconde et un angle de champs 30 degrés, le capteur d'images étant agencé dans un cockpit d'un hélicoptère ayant trois pales tournant à une vitesse de 390 tours par minute, il suffit d'une seconde pour que chaque pale soit visible dans une vingtaine d'images sources. Le nombre de passages de chaque pale dans le champ de vision du capteur d'images augmente linéairement en fonction de la durée de la période de mesure.

Ce procédé permet donc d'obtenir un nombre conséquent d'images sources contenant une portion de chaque pale lors de la rotation du rotor.

A l'aide de ces images sources, le calculateur estime le trajet suivi par un point caractéristique de chaque pale dans le champ de vision du capteur d'images. En particulier, le calculateur détermine une courbe de tendance par pale à l'aide des points caractéristiques relatifs à cette pale.

En outre, le calculateur détermine un écart moyen entre au moins une courbe de tendance et les autres courbes de tendance. Par exemple, une courbe de tendance est considérée comme étant une courbe de référence et le calculateur détermine l'écart moyen entre cette courbe de tendance de référence et les autres courbes de tendance.

Chaque écart moyen est l'image d'un écart de hauteurs entre deux pales et donc d'un écart de portances entre ces deux pales. Dans le cadre éventuel d'un procédé d'équilibrage le calculateur ou un opérateur élabore alors des suggestions de réglage par exemple par le biais d'une méthode connue, et éventuellement en sollicitant un réseau de neurones ou des abaques, en fonction des écarts moyens estimés.

Ce procédé permet ainsi d'estimer statistiquement la hauteur de passage des pales dans un espace scruté par le capteur d'images par analyse d'images. Le procédé ne nécessite pas de synchroniser un dispositif d'acquisition d'images avec le rotor.

Le procédé peut être mis en oeuvre par un dispositif simple, et par exemple à l'aide d'un appareil portable multifonction tel qu'un téléphone multifonction dénommé « smartphone » en langue anglaise, une tablette multifonction ou encore un ordinateur portable. En effet, des appareils portables multifonction récents sont munis d'au moins un capteur d'images apte à prendre des photographies de bonne qualité à un taux de rafraichissement élevé, par exemple de l'ordre de 120 images par seconde.

Le procédé peut de plus comporter une ou plusieurs des caractéristiques qui suivent.

Selon un aspect, le procédé peut comporter une étape de stabilisation desdites images sources par un algorithme de traitement d'images avec ledit calculateur avant ladite analyse des images.

Une telle étape tend à optimiser la netteté des images sources et ainsi le traitement réalisé.

Selon un aspect, le procédé peut comporter les étapes suivantes :
- analyse desdites images sources avec le calculateur pour identifier les images sources contenant une pale,
- identification sur chaque image source contenant une pale de la pale particulière visible sur cette image source.

Le calculateur peut être configuré pour traiter uniquement les images sources contenant au moins une partie d'une pale lors de l'étape de détermination des courbes de tendance, et déterminer quelle pale particulière est visible sur chaque image source contenant une pale.

Lors d'une étape intermédiaire optionnelle, le calculateur peut trier les images sources pour sélectionner uniquement les images sources contenant une portion de pale. Seules ces images sources porteuses d'une portion de pale dites par commodité « image d'étude » sont éventuellement exploitées par la suite ce qui peut permettre d'obtenir un procédé de traitement ayant une durée optimisée.

Selon un aspect, cette analyse des images sources visant à identifier les images sources contenant une pale peut être réalisée image par image.

Un algorithme usuel de détection d'un objet dans une image par reconnaissance de forme et/ou de couleur peut être utilisé par le calculateur à cet effet pour effectuer une détection de pale. Par exemple, sur chaque image, le calculateur enlève un fond de l'image. Suite à la soustraction du fond sur une image source contenant une pale, une zone représentant une pale apparait.

Selon un aspect, au moins une pale peut en outre comporter une cible qui lui est propre pour être distinguée des autres pales. L'étape d'« identification sur chaque image source contenant une pale de la pale particulière visible sur cette image source » peut comporter une étape de repérage des images sources contenant ladite cible et d'association de ces images sources contenant ladite cible à la pale portant la cible.

Pour déterminer quelle pale apparait sur une image source, cette solution propose de déposer une cible particulière sur au moins une pale pour identifier cette pale. Les autres pales peuvent être identifiées soit via leurs propres cibles soit par déduction. Par exemple, un autocollant coloré est appliqué sur une ou plusieurs pales.

Par exemple, en fonction du taux de rafraichissement du capteur d'images, plusieurs images successives peuvent comprendre une même pale. Le flux d'images comporte alors successivement une série d'images comprenant une même pale puis une série d'images ne comprenant pas une pale. En identifiant une pale, il est aisé d'en déduire quelle pale est visible sur une image.

Selon un exemple, pour un rotor tripale le flux d'images comprend de fait une première série d'images d'une même première pale, une série d'images sans pale, une deuxième série d'images d'une même deuxième pale, une série d'images sans pale, une troisième série d'images d'une même troisième pale puis une série d'images sans pale et ainsi de suite. En identifiant une pale sur une série d'images, on en déduit de fait quelles pales apparaissent sur les autres série d'images. Par exemple, si la deuxième série d'images d'une même deuxième pale contient la cible, la pale apparaissant sur la première série d'images est la pale se trouvant avant la deuxième pale portant la cible selon le sens de rotation du rotor et la pale apparaissant sur la troisième série d'images est la pale se trouvant après la deuxième pale portant la cible selon le sens de rotation du rotor.

Selon un aspect, chaque pale pouvant avoir une forme délimitée par un premier segment matérialisant le bord d'attaque de la pale ainsi qu'un deuxième segment matérialisant la bord de fuite de la pale et un segment d'extrémité, ledit point caractéristique de chaque pale peut être situé à l'intersection entre le premier segment et le segment d'extrémité ou entre le deuxième segment et le segment d'extrémité.

Par exemple, le calculateur positionne chaque image et/ou chaque forme dans un repère à deux dimensions. Le calculateur traite une forme représentant la pale dans ce repère par transformée de Hough pour déterminer les équations du premier segment, du deuxième segment et du segment d'extrémité afin d'en déduire les coordonnées du point caractéristique dans ce repère.

Ainsi, pour effectuer ladite « détermination d'une courbe de tendance pour chaque pale », le procédé peut comporter les étapes suivantes pour chaque image source contenant une pale :
- extraction d'une forme représentant la pale à partir de l'image source contenant une pale, par exemple par soustraction d'un fond à l'image source,
- calcul des coordonnées d'un point caractéristique de ladite forme dans un repère à deux dimensions.

Selon une première réalisation, les images sources pouvant contenir alternativement une succession de plusieurs images sources contenant une même pale et une succession de plusieurs images sources ne contenant aucune pale, le procédé peut comporter les étapes suivantes :
- pour chaque succession de plusieurs images sources contenant une même pale, détermination d'une courbe intermédiaire associée à une pale à partir des points caractéristiques déterminés par analyse des images sources de cette succession,
- détermination d'une courbe moyenne égale à la moyenne des courbes intermédiaires associées à une pale, la courbe de tendance de chaque pale étant la courbe moyenne associée à cette pale.

Ainsi, le flux d'images peut comporter successivement une série d'images comprenant une même pale puis une série d'images ne comprenant pas une pale. Pour chaque série d'images comprenant une même pale, le calculateur détermine la position du point caractéristique de la pale dans chaque image de cette série et en déduit la courbe intermédiaire passant sensiblement par ces points caractéristiques.

Autrement dit, pour chaque passage d'une pale dans le champ de vision de la caméra, le calculateur détermine une courbe intermédaire.

Par exemple, chaque courbe intermédiaire peut être une courbe polynomiale déterminée par une méthode usuelle minimisant les erreurs quadratiques en fonction de points caractéristiques.

Dès lors, le calculateur effectue la moyenne des courbes intermédiaires d'une pale pour établir la courbe de tendance de cette pale.

Cette première réalisation peut tendre à limiter l'impact d'un mouvement d'un opérateur tenant le capteur d'images par exemple.

Selon une deuxième réalisation, le procédé comporte l'étape suivante : détermination d'une courbe de tendance par pale en fonction de tous les points caractéristiques de cette pale.

Selon cette deuxième réalisation, le calculateur calcule directement pour chaque pale une seule courbe passant sensiblement par les points caractéristiques, cette seule courbe représentant la courbe de tendance de cette pale.

Eventuellement, chaque courbe de tendance est une courbe polynomiale minimisant une erreur quadratique.

Selon un aspect, au moins un écart moyen peut être obtenu :
- en positionnant lesdites courbes de tendance dans un repère ayant une ordonnée exprimée en pixel,
- en déterminant le nombre de pixels séparant deux courbes de tendance, ledit écart moyen étant égal au nombre de pixels multiplié par une valeur mémorisée.

Par exemple, le repère ayant éventuellement permis de déterminer les coordonnées des points caractéristiques et de fait les courbes de tendance peut être dimensionné en pixel.

Les courbes de tendance des pales sont ainsi dessinées dans ce repère.

Dès lors, le calculateur détermine l'écart entre deux courbes de tendance en nombre de pixels. De plus, le calculateur peut en déduire un écart de hauteurs, en millimètre ou autres, en multipliant le nombre de pixels par une valeur mémorisée. Selon une variante, cette valeur est une constante. Selon une autre variante, le calculateur mesure sur une image le nombre de pixels séparant le bord de fuite du bord d'attaque d'une pale, ladite valeur étant égale à ce nombre de pixels divisé par une corde d'un profil de la pale.

Selon un aspect, un procédé d'équilibrage d'un rotor comprenant une pluralité de pales en rotation met en oeuvre le procédé de l'invention précédemment décrit pour évaluer au moins un écart de hauteurs. Dès lors, le procédé d'équilibrage peut comporter une phase d'équilibrage du rotor en fonction de cet au moins un écart de hauteurs comportant au moins une des étapes suivantes : ajustement d'un élément pesant d'au moins une pale, ajustement d'un volet compensateur d'au moins une pale, ajustement de la longueur d'une bielle de pas d'au moins une pale.

Chaque ajustement est donc réalisé en fonction des écarts moyens déterminés.

Outre un procédé d'évaluation d'un écart de hauteurs, l'invention vise aussi un dispositif mettant en oeuvre ce procédé.

L'invention vise ainsi un dispositif apte à permettre de réaliser un équilibrage d'un rotor comprenant une pluralité de pales en rotation.

Ce dispositif comporte un capteur d'images et un calculateur qui sont configurés pour appliquer le procédé de l'invention.

Ledit dispositif peut comprendre un appareil portable multifonction incluant ledit capteur d'images et ledit calculateur et/ou le dispositif peut comprendre au moins une cible à positionner sur une pale.

L'invention et ses avantages apparaîtront avec plus de détails dans le cadre de la description qui suit avec des exemples donnés à titre illustratif en référence aux figures annexées qui représentent :
[Fig 1] la figure 1, une vue d'un dispositif selon l'invention,
[Fig 2] la figure 2, une vue d'une cible comprenant une unique bande,
[Fig 3] la figure 3, une vue d'une cible selon la figure 2 agencée sur une pale,
[Fig 4] la figure 4, un logigramme illustrant un procédé selon l'invention,
[Fig 5] la figure 5, une succession d'images capturées avec le capteur d'images,
[Fig 6] la figure 6, une succession d'images capturées avec le capteur d'images dans la continuité des images de la figure 5,
[Fig 7] la figure 7, un grossissement d'une image montrant une cible sur une pale,
[Fig 8] la figure 8, une image contenant une pale avant traitement,
[Fig 9] la figure 9, une forme obtenue par traitement de l'image de la figure 7,
[Fig 10] la figure 10, un vue illustrant le positionnement de points caractéristiques obtenus pour une même pale lors d'un tour,
[Fig 11] la figure 11, un vue illustrant une étape d'obtention d'une courbe de tendance, et
[Fig 12] la figure 12, un vue illustrant le calcul d'écarts moyens.

Les éléments présents dans plusieurs figures distinctes sont affectés d'une seule et même référence.

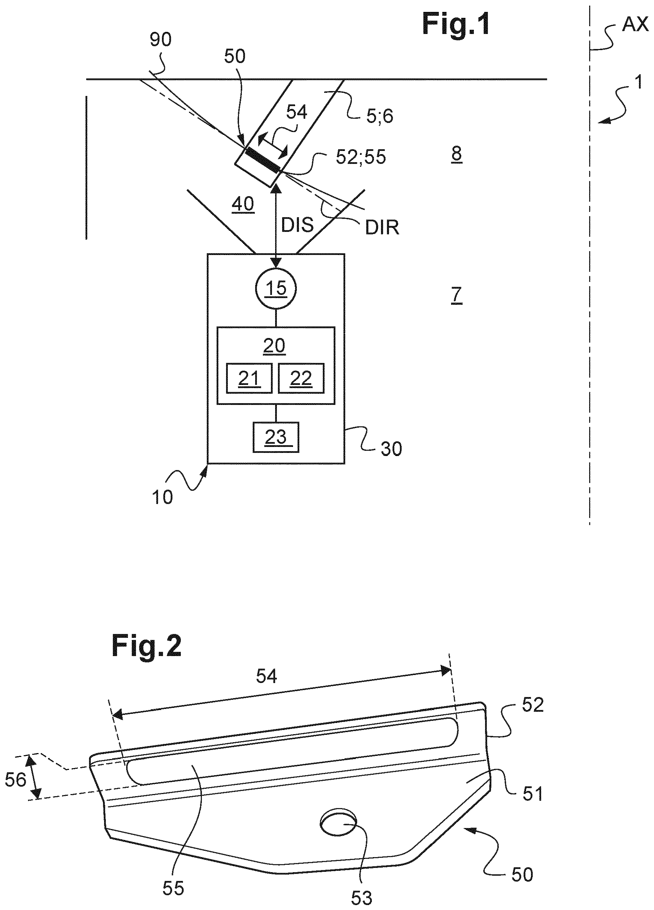

La figure 1 présente un dispositif 10 pour déterminer une trajectoire d'une pale et par exemple pour évaluer des écarts de hauteurs afin de réaliser un équilibrage d'un rotor 5 mobile en rotation autour d'un axe de rotation AX d'un giravion 1, le rotor 5 comprenant une pluralité de pales 6. Les pales 6 sont susceptibles de ne pas être strictement identiques en raison de tolérances de fabrication. Le procédé d'équilibrage vise à régler le rotor 5 pour tendre notamment à obtenir la même portance avec chaque pale 6 pour un même angle de pas et un même azimut afin de limiter par exemple les vibrations du rotor 5.

Le dispositif 10 comporte un capteur d'images 15 capable de prendre des photographies d'un espace 40. Le capteur d'images 15 peut par exemple prendre la forme d'un capteur photographique pouvant être sollicité à haute vitesse. Selon un exemple, le capteur d'images 15 peut prendre la forme d'un capteur apte à prendre au moins 120 photographies par seconde.

Le capteur d'images 15 peut acquérir en continu des images sur une période de mesure suivant le taux de rafraîchissement de ce capteur d'images 15, et non pas selon une fréquence réglée en fonction de la fréquence de rotation du rotor 5.

Par ailleurs, le dispositif 10 comporte un calculateur 20 relié au capteur d'images 15 pour acquérir des images saisies par le capteur d'images 15 voire pour effectuer au moins une opération visant à visualiser une trajectoire suivie par chaque pale 6 et des écarts de hauteurs entre les pales. Le calculateur 20 peut comprendre par exemple au moins un processeur 21 et au moins une mémoire 22, au moins un circuit intégré et par exemple un circuit connu sous l'expression anglaise « Field Programmable Gate Arrays », au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

En outre, le dispositif 10 peut comprendre un écran 23 relié au calculateur 20.

Un tel dispositif 10 peut comprendre un appareil portable 30 muni de l'écran 23 et/ou du calculateur 20 et/ou du capteur d'images 15. Par exemple, l'appareil portable 30 peut être un « smartphone » de dernière génération muni d'un capteur d'images 15 ayant un taux de rafraîchissement élevé. Par exemple, le capteur d'images 15 peut avoir un angle de champs de l'ordre de 30° pour photographier l'espace 40 requis.

L'appareil portable 30 peut être agencé de manière à visualiser l'extrémité des pales 6 en rotation, voire notamment l'intrados des pales 6 au niveau de cette extrémité. Par exemple, un opérateur peut s'assoir dans une cabine 7 de l'aéronef afin de pouvoir visualiser les pales 6 avec l'appareil portable 30 au travers d'une vitre 8.

Par ailleurs, le dispositif 10 peut comporter au moins une cible 50 solidarisée à une pale 6 et par exemple au niveau d'une extrémité d'une pale 6. Plusieurs pales 6, voire chaque pale 6, peuvent comprendre une cible 50. Selon une autre réalisation une unique pale 6 comprend une cible 50, les autres pales 6 n'ayant aucune cible.

Chaque cible 50 est positionnée de manière à être visible par le capteur d'images 15 lorsque la pale traverse l'espace 40 couvert par le champ de vision du capteur d'images 15.

La cible 50 peut comprendre au moins une bande colorée 55 allongée, à savoir par exemple plus longue que haute.

Chaque bande colorée 55 présente une longueur 54 selon une direction tangentielle DIR sensiblement tangente à un cercle 89 centré sur l'axe de rotation AX du rotor 5.

De plus, chaque bande colorée 55 présente une hauteur 56 selon une direction parallèle à l'axe de rotation AX. La longueur 54 est favorablement supérieure à la hauteur 56.

La figure 2 illustre une cible 50 comprenant une unique bande colorée 55.

Quel que soit le nombre de bande colorée, la cible peut comprendre une bande colorée éventuellement fixée à une pale avec un adhésif, sans support additionnel.

Alternativement, selon la figure 2 la cible 50 peut comporter un support. Le support peut comprendre une première paroi 51 à fixer à une pale 6. En particulier, la première paroi 51 peut être disposée contre l'intrados INT de la pale 6 et/ou à proximité de l'extrémité libre de la pale 6. La première paroi 51 comporte alors une fixation permettant de la solidariser à une pale 6. Selon l'exemple illustré, la fixation comprend un orifice 53 ménagé dans la première paroi 51 pour serrer la première paroi 51 à une pale 6 par serrage à l'aide d'une vis ou d'un rivet par exemple. En présence d'un unique orifice 53, cet orifice 53 peut être décentré pour obtenir une mise en drapeau de la cible en cas de desserrage.

La cible peut de plus comprendre une deuxième paroi 52, éventuellement solidaire de la première paroi 51. Selon l'exemple illustré, la première paroi 51 est orthogonale à la deuxième paroi 52 pour former une pièce en L.

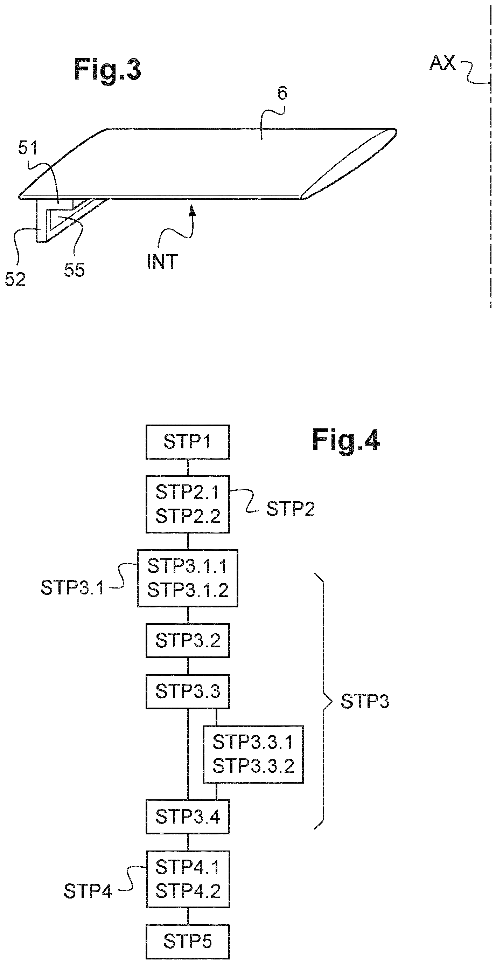

Chaque bande colorée 55 est ainsi disposée sur la deuxième paroi 52 pour être visible par le capteur d'images 15 lors de la rotation de la pale 6. Ainsi et en référence à la figure 3, chaque bande colorée 55 peut être en regard de l'axe de rotation AX par exemple.

Chaque bande colorée peut être monochrome et/ou peut avoir une couleur distincte d'une couleur du ciel et/ou de la pale 6. Par exemple, la bande colorée a une couleur rouge.

Selon un autre aspect, la bande colorée peut avoir une longueur 54 très supérieure à sa hauteur 56. Par exemple, la longueur 54 peut être supérieure à deux centimètres voire à trois centimètres. Selon un exemple, la longueur 54 peut être sensiblement équivalente à la corde d'un profil de la pale 6 au niveau de la cible 50. On rappelle que la corde d'un profil représente la longueur d'un segment reliant le bord d'attaque et le bord de fuite du profil. Selon un autre exemple, la longueur 54 est fonction d'au moins une vitesse d'obturation du capteur d'images 15 ou d'une vitesse de rotation du rotor 5 ou d'une distance DIS séparant ladite cible 50 et ledit capteur d'images 15 dans un champ de captation d'images 40 du capteur d'images 15.

Par ailleurs, la cible 50 peut avoir une plusieurs bandes colorées 55. La figure 2 illustre une cible 50 ayant une unique bande colorée 55 mais la cible 50 peut avoir par exemple au moins deux bandes colorées 55 parallèles.

La figure 4 illustre un procédé selon l'invention pour réaliser un équilibrage d'un rotor.

Durant une étape préliminaire optionnelle STP1, le procédé peut comporter une étape d'agencement d'au moins une cible 50 sur une pale 6.

Le procédé peut alors comporter une étape d'acquisition d'images STP2 réalisée à l'aide du dispositif 10 et notamment du capteur d'images 15. En particulier, le capteur d'images 15 enregistre successivement des images de l'espace 40 dénommées par commodité « images sources » lors de la rotation du rotor 5 durant une période de mesure. Le terme « enregistre » signifie que le capteur d'images 15 capture les images sources, par exemple en continu lors de la période de mesure suivant son taux de rafraichissement. Le calculateur 20 peut acquérir les images sources prises par le capteur d'images 15.

Ainsi, durant l'étape d'acquisition d'images STP2, le capteur d'images 15 capture des images sources et les transmet au calculateur 20 pendant une étape de capture d'images STP2.1.

En particulier, le capteur d'images 15 peut prendre des photographies ou une vidéo.

Eventuellement, durant une étape de stabilisation STP2.2, le calculateur 20 stabilise les images sources selon une méthode usuelle. Le calculateur 20 comporte et applique par exemple un algorithme de traitement d'images pour stabiliser les images sources.

Par la suite, le calculateur 20 peut analyser les images sources pour déterminer quelle pale 6 apparait sur quelle image.

Durant une étape de traitement STP3, le calculateur 20 peut déterminer pour chaque pale 6 une courbe de tendance qui reflète la trajectoire de cette pale dans l'espace 40. La courbe de tendance de chaque pale 6 est établie en prenant en considération les positions successives d'au moins un point caractéristique de cette pale 6 à l'aide de chaque image source contenant cette pale 6. Les courbes de tendance peuvent être affichées sur l'écran 23.

A cet effet, le calculateur 20 peut appliquer un algorithme de traitement d'images pour analyser les images sources une par une.

En particulier, durant une étape d'identification STP 3.1, le calculateur 20 peut effectuer un traitement de toutes les images en appliquant une méthode de traitement d'images pour identifier durant une étape STP3.1.1 si une image source contient une pale 6 et pour identifier cette pale 6, à savoir pour déterminer durant une étape STP3.1.2 quelle pale 6 particulière du rotor 5 est visible sur une image source.

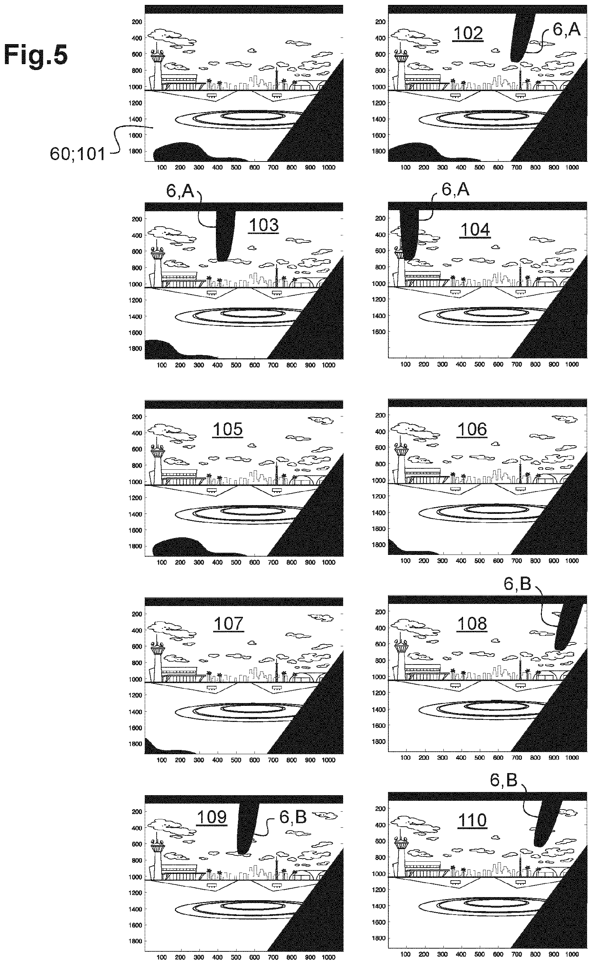

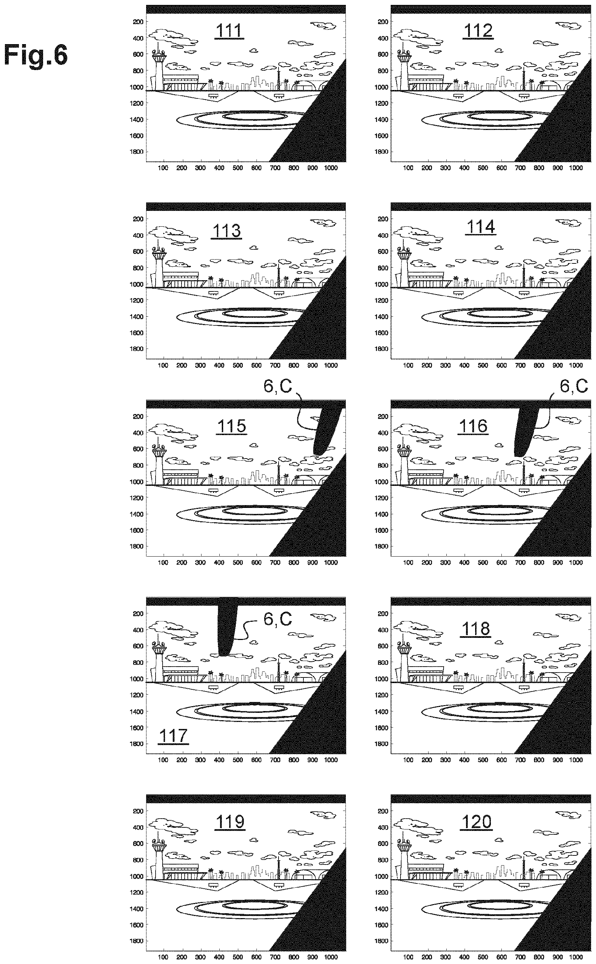

La figure 5 et la figure 6 présentent une série d'images sources 101-120 obtenues par un capteur d'images 15 lors de la rotation d'un rotor 5 contenant trois pales 6 dénommées A, B, C. Certaines images sources 102-104, 108-110, 115-117 contiennent une pale 6 et certaines images sources 101, 105-107, 111-114, 119-120 ne contiennent pas une pale 6.

Pour déterminer si une image source contient une pale 6, le calculateur 20 peut appliquer un algorithme de reconnaissance de forme. Par exemple, chaque image source 101-120 peut prendre la forme d'une matrice de pixels. Le calculateur 20 soustrait à la matrice de chaque image source 101, 120 une matrice de pixels correspondant à un fond présent sur toutes les images sources. Sur les images sources contenant une pale 6, il en résulte l'obtention d'une forme de pale.

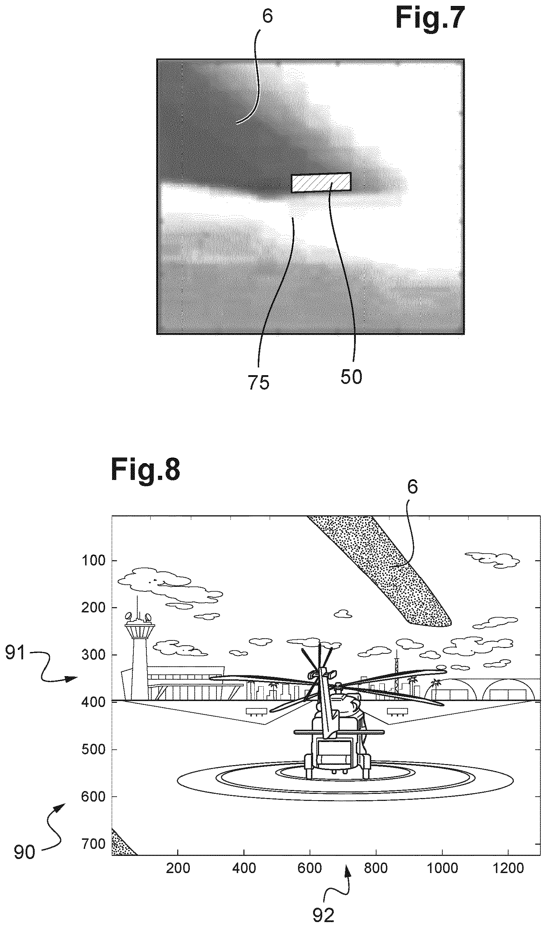

Pour identifier quelle est la pale 6 présente sur une image source contenant une pale 6, le calculateur 20 peut mettre en oeuvre une étape de repérage des images sources contenant une cible 50 et d'association de ces images sources particulières à la pale 6 portant la cible, éventuellement la pale B selon notre exemple. A cet effet, le calculateur peut rechercher une cible 50 le cas échéant par reconnaissance de couleur. En référence à la figure 7, la cible 50 colorée peut être identifiée par sa couleur. Sur cette figure 7, la cible 50 est illustrée en noir pour être distingué d'un ciel 75. Toutes les images sources contenant cette cible 50 sont alors affectées à la pale B munie de la cible 50.

En référence aux figures 5 et 6, en présence d'un taux de rafraichissement élevé, le flux d'images comporte à chaque tour du rotor plusieurs images sources 102-104, 108-110, 115-117 successives montrant une même pale 6 puis plusieurs images successives ne contenant pas une pale 6 et ainsi de suite. Plus particulièrement, le flux d'images comporte alternativement une série d'images contenant une même pale 6 et une série d'images ne contenant pas une pale 6.

Dès lors, en identifiant une pale 6 particulière du rotor sur certaines séries d'images sources, il est aisé d'en déduire les autres pales 6 visibles sur les autres images sources. Par exemple, si le calculateur 20 détermine la présence de la cible 50 les images 108, 109, 110, le calculateur 20 mémorise que ces images 108, 109, 110 contiennent la pale B portant la cible. Le calculateur 20 peut en déduire que les images 102, 103, 104 contiennent la pale A qui précède la pale B équipée de la cible 50 selon le sens de rotation du rotor et que les images 115, 116, 117 contiennent au contraire la pale C suivant la pale B équipée de la cible 50 selon le sens de rotation du rotor 5.

Selon une autre variante, chaque pale 6 peut être équipée d'une cible 50 colorée qui lui est propre pour être repérée sur les images sources.

Le calculateur 20 peut en outre appliquer les étapes qui suivent à chaque image source en effectuant une analyse image par image ou peut éventuellement traiter uniquement les images sources contenant une pale 6.

La figure 8 présente une image source contenant une pale 6 pour illustrer une réalisation du procédé. Cette image source peut être associée à un repère 90 à deux dimensions 91, 92 exprimées en pixel.

En référence à la figure 4, durant une étape d'extraction STP3.2, le calculateur 20 peut extraire de l'image source une forme représentant la pale 6 et la positionner dans le repère 90.

Comme indique précédemment, le calculateur 20 peut soustraire un fond à cette image.

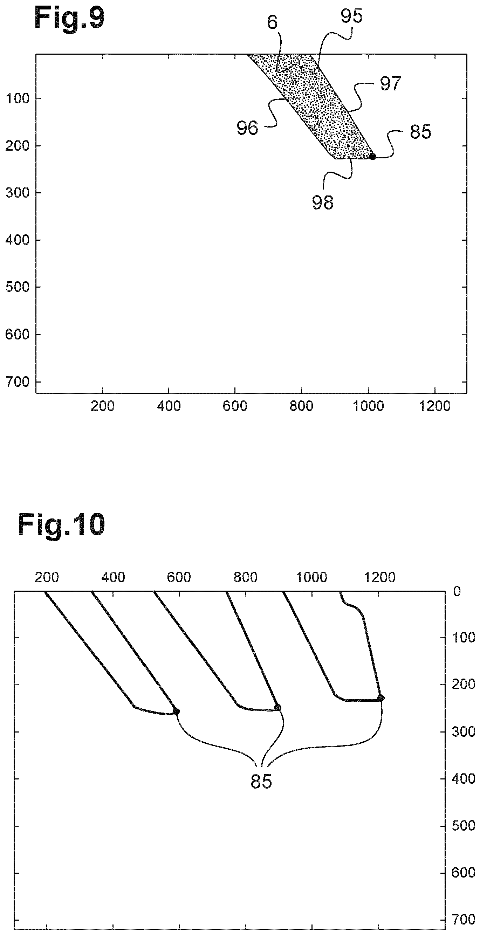

En référence à la figure 9, le calculateur 20 extrait ainsi de l'image source de la figure 8 une forme 95 relative à une pale 6. Cette forme est délimitée par un premier segment 96 de bord d'attaque, un deuxième segment 97 de bord de fuite et un segment d'extrémité 98 matérialisant l'extrémité de la pale 6.

Le calculateur 20 peut déterminer les équations du premier segment 96, du deuxième segment 97 et du segment d'extrémité 98 par transformées de Hough.

Ensuite et en référence à la figure 4 et à la figure 9, durant une étape de positionnement STP3.3, le calculateur peut déterminer les coordonnées dans le repère 90 du point caractéristique 85 de la pale sur l'image source traitée, ce point caractéristique 85 étant situé à l'intersection soit de premier segment 96 et du segment d'extrémité 98 soit du deuxième segment 97 et du segment d'extrémité 98. Selon l'exemple illustré, le point caractéristique 85 est positionné à l'intersection du deuxième segment 97 et du segment d'extrémité 98.

Durant une étape STP3.4, le calculateur 20 détermine une courbe de tendance par pale.

Selon une première réalisation et en référence à la figure 10, lors d'un tour d'une pale, le calculateur 20 détermine une courbe intermédiaire par série d'images sources contenant une même pale.

Ainsi, le calculateur 20 détermine image par image les coordonnées des points caractéristiques 85 de la pale, soit trois points caractéristique 85 pour les images 102 à 104 de la figure 5 par exemple.

Lorsque le calculateur 20 traite une image source dépourvue de la pale, à savoir l'image source 105 selon la figure 5, le calculateur 20 détermine l'équation d'une courbe intermédiaire durant une étape de traçage STP3.3.1. Cette courbe intermédiaire peut être approximée par une courbe polynomiale établie par une méthode usuelle.

Pour chaque pale 6 et chaque tour effectué par les pales 6 durant la période de mesure, le calculateur 20 établit une courbe intermédiaire.

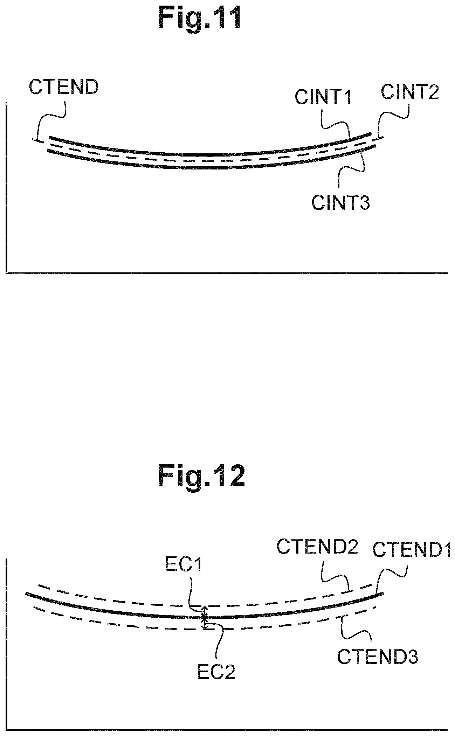

En référence à la figure 11, lorsque toutes les images sources sont traitées, le calculateur 20 effectue durant une étape STP3.3.2 pour chaque pale la moyenne des courbes intermédiaires CINT1, CINT2, CINT3 de cette pale 6 pour obtenir la courbe de tendance CTEND de la pale 6 lors de l'étape de détermination de la courbe de tendance STP3.4. La figure 11 illustre ainsi le traitement effectué suite à une période de mesure ayant permis à chaque pale 6 d'effectuer trois tours.

Selon une deuxième réalisation non illustrée, durant l'étape 3.4 le calculateur 20 détermine directement une courbe de tendance CTEND1, CTEND2, CTEND3 pour chaque pale 6 en utilisant tous les points caractéristiques relevés lors de tous les tours de la pale 6.

Durant une étape d'évaluation STP4, le calculateur 20 peut déterminer au moins un écart moyen EC1, EC2 entre une courbe de tendance CTEND1 et une autre courbe de tendance CTEND2, CTEND3.

En référence à la figure 12, durant une étape STP4.1 le calculateur 20 peut positionner les courbes de tendance CTEND1, CTEND2, CTEND3 dans un repère à deux dimensions exprimé en pixel.

Selon l'exemple illustré, le rotor 5 comporte trois pales 6. Dès lors, trois courbes de tendance CTEND1, CTEND2, CTEND3 sont représentées.

Le calculateur 20 détermine durant une étape STP4.2 au moins un écart moyen exprimé en pixel entre une courbe de tendance et une autre courbe de tendance. Selon l'exemple illustré, une courbe de tendance CTEND1 peut être considérée comme étant une courbe de référence et est comparée aux deux autres courbes de tendance CTEND2, CTEND 3 pour déterminer deux écarts moyens EC1, EC2 exprimés en pixel. Par exemple, la courbe de tendance associée à une pale 6 portant une cible 50 peut être considérée comme étant une courbe de référence.

Le calculateur 20 peut alors multiplier chaque écart moyen par une valeur pour obtenir un écart moyen en millimètre par exemple.

Cette valeur peut être une constante mémorisée ou peut être établie en divisant la corde d'un profil des pales par le nombre de pixels couvrant cette corde sur les images sources.

Durant une étape de suggestion STP5, le calculateur 20 peut déterminer au moins un réglage à réaliser pour équilibrer le rotor en fonction des écarts moyens. Le réglage peut être déterminé par des méthodes usuelles et peut consister à agir sur au moins un tab, au moins un élément pesant et/ou au moins une bielle de pas. Par exemple, le calculateur 20 émet un signal numérique, analogique ou optique pour afficher le réglage suggéré sur l'écran 23.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Procédé d'évaluation d'au moins un écart de hauteurs entre au moins deux pales (6) d'un rotor (5) comprenant une pluralité de pales (6) en rotation, le procédé comportant au moins les étapes suivantes :
- à l'aide d'un capteur d'images (15), enregistrement (STP2) d'images sources (60) successives dans un espace (40) traversé par lesdites pales (6) en rotation durant une période de mesure,
**caractérisé par**:
- détermination (STP3) pour chaque pale (6) avec un calculateur (20) d'une courbe de tendance (CTEND1, CTEND2, CTEND3) de la trajectoire de cette pale (6) dans ledit espace (40) en fonction de positions successives d'un point caractéristique (85) de cette pale (6) à l'aide de chaque image source (60) contenant cette pale (6),
- évaluation (STP4) par le calculateur (20) d'au moins un écart moyen (EC1, EC2) entre une courbe de tendance (CTEND1, CTEND2, CTEND3) et une autre courbe de tendance (CTEND1, CTEND2, CTEND3), ledit écart de hauteurs étant l'image dudit écart moyen (EC1, EC2).

2. Procédé selon la revendication 1, **caractérisé en ce que** ledit procédé comporte une étape de stabilisation (STP2.2) desdites images sources (60) par un algorithme de traitement d'images avec ledit calculateur (20) avant ladite analyse des images.

3. Procédé selon l'une quelconque des revendications 1 à 2, **caractérisé en ce que** ledit procédé comporte les étapes (STP3.1) suivantes :
- analyse (STP3.1.1) desdites images sources (60) avec le calculateur (20) pour identifier les images sources contenant une pale (6),
- identification (STP3.1.2) sur chaque image source contenant une pale (6) de la pale particulière visible sur cette image source.

4. Procédé selon la revendication 3,
**caractérisé en ce que** ladite analyse est réalisée image par image.

5. Procédé selon l'une quelconque des revendications 3 à 4, **caractérisé en ce qu'**au moins une pale (6) comporte une cible (50) qui lui est propre pour être distinguée des autres pales (6), ladite identification (STP3.1.2) sur chaque image source (60) contenant une pale (6) de la pale particulière visible sur cette image source comporte une étape de repérage des images sources contenant ladite cible (50) et d'association de ces images sources contenant ladite cible (50) à la pale (6) portant la cible (50).

6. Procédé selon l'une quelconque des revendications 1 à 5, **caractérisé en ce que** chaque pale ayant une forme délimitée par un premier segment (96) matérialisant le bord d'attaque de la pale ainsi qu'un deuxième segment (97) matérialisant la bord de fuite de la pale et un segment d'extrémité (98), ledit point caractéristique (85) de chaque pale est situé à l'intersection entre le premier segment (96) et le segment d'extrémité (98) ou entre le deuxième segment (97) et le segment d'extrémité (98).

7. Procédé selon l'une quelconque des revendications 1 à 6, **caractérisé en ce que** pour effectuer ladite détermination (STP3) d'une courbe de tendance pour chaque pale le procédé comporte les étapes suivantes pour chaque image source contenant une pale :
- extraction (STP3.2) d'une forme représentant la pale à partir de l'image source contenant une pale,
- calcul (STP3.3) de coordonnées du point caractéristique de ladite forme dans un repère (85) à deux dimensions.

8. Procédé selon la revendication 7,
**caractérisé en ce que** lesdites images sources contenant alternativement une succession de plusieurs images sources (102-104, 108-110, 115-117) contenant une même pale et une succession de plusieurs images sources (101, 105-107, 111-114,118-120) ne contenant aucune pale, le procédé comporte les étapes suivantes :
- pour chaque succession de plusieurs images sources contenant une même pale, détermination (STP3.3.1) d'une courbe intermédiaire (CINT1, CINT2, CINT3) associée à un pale (6) à partir des points caractéristiques (85) déterminés par analyse des images sources de cette succession,
- détermination (STP3.3.2) d'une courbe moyenne égale à la moyenne des courbes intermédiaires (CINT1, CINT2, CINT3) associées à une pale, la courbe de tendance (CTEND1, CTEND2, CTEND3) de chaque pale étant la courbe moyenne associée à cette pale.

9. Procédé selon la revendication 8,
**caractérisé en ce que** chaque courbe intermédiaire (CINT1, CINT2, CINT3) est une courbe polynomiale.

10. Procédé selon la revendication 7,
**caractérisé en ce que** le procédé comporte l'étape (STP3.4) suivante : détermination d'une courbe de tendance (CTEND1, CTEND2, CTEND3) par pale (6) en fonction de tous les points caractéristiques (85) de cette pale (6).

11. Procédé selon l'une quelconque des revendications 1 à 10, **caractérisé en ce que** chaque courbe de tendance (CTEND1, CTEND2, CTEND3) est une courbe polynomiale minimisant une erreur quadratique.

12. Procédé selon l'une quelconque des revendications 1 à 11, **caractérisé en ce que** ledit au moins un écart moyen (EC1, EC2) est obtenu :
- en positionnant (STP4.1) lesdites courbes de tendance (CTEND1, CTEND2, CTEND3) dans un repère ayant une ordonnée exprimée en pixel,
- en déterminant (STP4.2) le nombre de pixels séparant deux courbes de tendance (CTEND1, CTEND2, CTEND3), ledit écart moyen (EC1, EC2) étant égal au nombre de pixels multiplié par une valeur mémorisée.

13. Procédé d'équilibrage d'un rotor (5) comprenant une pluralité de pales (6) en rotation,
**caractérisé en ce que** ledit procédé comporte une étape de détermination d'au moins un écart de hauteurs entre au moins deux pales en appliquant le procédé selon l'une quelconque des revendications 1 à 12, ledit procédé comprenant une phase (STP5) de réglage du rotor (5) en fonction dudit écart de hauteurs comportant au moins une des étapes suivantes : ajustement d'un élément pesant d'au moins une pale (6), ajustement d'un volet compensateur d'au moins une pale (6), ajustement de la longueur d'une bielle de pas d'au moins une pale (6).

14. Dispositif (10),
**caractérisé en ce que** ledit dispositif (10) comporte un capteur d'images (15) et un calculateur (20) qui sont configurés pour appliquer le procédé selon l'une quelconque des revendications 1 à 12.

15. Dispositif selon la revendication 14,
**caractérisé en ce que** ledit dispositif (10) comprend un appareil portable multifonction (30) incluant ledit capteur d'images (15) et ledit calculateur (20).

## Patentansprüche

1. Verfahren zum Bewerten mindestens eines Höhenunterschieds zwischen mindestens zwei Blättern (6) eines Rotors (5), der eine Mehrzahl von rotierenden Blättern (6) umfasst, wobei das Verfahren mindestens die folgenden Schritte umfasst:
- mit Hilfe eines Bildsensors (15), Aufzeichnen (STP2) von aufeinanderfolgenden Quellbildern (60) in einem während eines Messzeitraums von den rotierenden Blättern (6) durchlaufenen Raum (40),
**gekennzeichnet durch**:
- für jedes Blatt (6) mit einem Rechner (20) Bestimmen (STP3) einer Trendkurve (CTEND1, CTEND2, CTEND3) der Trajektorie dieses Blattes (6) in dem Raum (40) in Abhängigkeit von aufeinanderfolgenden Positionen eines charakteristischen Punktes (85) dieses Blattes (6) mit Hilfe jedes Quellbildes (60), das dieses Blatt (6) enthält,
- Bewerten (STP4), durch den Rechner (20), von mindestens einem mittleren Unterschied (EC1, EC2) zwischen einer Trendkurve (CTEND1, CTEND2, CTEND3) und einer anderen Trendkurve (CTEND1, CTEND2, CTEND3), wobei der Höhenunterschied das Bild des mittleren Unterschieds (EC1, EC2) ist.

2. Verfahren nach Anspruch 1,
**dadurch gekennzeichnet, dass** das Verfahren einen Schritt des Stabilisierens (STP2.2) der Quellbilder (60) durch einen Bildverarbeitungsalgorithmus mit dem Rechner (20) vor dem Analysieren der Bilder umfasst.

3. Verfahren nach einem der Ansprüche 1 bis 2,
**dadurch gekennzeichnet, dass** das Verfahren die folgenden Schritte (STP3.1) umfasst:
- Analysieren (STP3.1.1) der Quellbilder (60) mit dem Rechner (20), um Quellbilder zu identifizieren, die ein Blatt (6) enthalten,
- in jedem Quellbild, das ein Blatt (6) enthält, Identifizieren (STP3.1.2) des bestimmten Blattes, das in diesem Quellbild sichtbar ist.

4. Verfahren nach Anspruch 3,
**dadurch gekennzeichnet, dass** das Analysieren Bild für Bild durchgeführt wird.

5. Verfahren nach einem der Ansprüche 3 bis 4,
**dadurch gekennzeichnet, dass** mindestens eine Blatt (6) eine ihm eigenes Markierung (50) aufweist, um von den anderen Blättern (6) unterschieden zu werden, wobei in jedem ein Blatt (6) enthaltenden Quellbild (60) das Identifizieren (STP3.1.2) des bestimmten Blattes, das in diesem Quellbild sichtbar ist, einen Schritt des Ermittelns der Quellbilder, die die Markierung (50) enthalten, und des Zuordnens dieser die Markierung (50) enthaltenden Quellbilder zu dem die Markierung (50) tragenden Blatt (6) umfasst.

6. Verfahren nach einem der Ansprüche 1 bis 5,
**dadurch gekennzeichnet, dass** jedes Blatt eine Form hat, die durch ein erstes Segment (96), das die Vorderkante des Blattes verkörpert, sowie ein zweites Segment (97), das die Hinterkante des Blattes verkörpert, und ein Endsegment (98) begrenzt ist, wobei der charakteristische Punkt (85) jedes Blattes an dem Schnittpunkt zwischen dem ersten Segment (96) und dem Endsegment (98) oder zwischen dem zweiten Segment (97) und dem Endsegment (98) liegt.

7. Verfahren nach einem der Ansprüche 1 bis 6,
**dadurch gekennzeichnet, dass** zur Durchführung des Bestimmens (STP3) einer Trendkurve für jedes Blatt das Verfahren die folgenden Schritte für jedes ein Blatt enthaltende Quellbild umfasst:
- Extrahieren (STP3.2) einer das Blatt darstellenden Form aus dem ein Blatt enthaltenden Quellbild,
- Berechnen (STP3.3) von Koordinaten des charakteristischen Punkts der Form in einem zweidimensionalen Koordinatensystem (85).

8. Verfahren nach Anspruch 7,
**dadurch gekennzeichnet, dass** die Quellbilder abwechselnd eine Folge von mehreren ein einzelnes Blatt enthaltenden Quellbildern (102-104, 108-110, 115-117) und eine Folge von mehreren kein Blatt enthaltenden Quellbildern (101, 105-107, 111-114, 118-120) enthalten, wobei das Verfahren die folgenden Schritte umfasst:
- für jede Folge von mehreren Quellbildern, die dasselbe Blatt enthalten, Bestimmen (STP3.3.1) einer einem Blatt (6) zugeordneten Zwischenkurve (CINT1, CINT2, CINT3) anhand der durch Analysieren der Quellbilder dieser Folge ermittelten charakteristischen Punkte (85),
- Bestimmen (STP3.3.2) einer mittleren Kurve, die gleich dem Mittelwert der mit einem Blatt assoziierten Zwischenkurven (CINT1, CINT2, CINT3) ist, wobei die Trendkurve (CTEND1, CTEND2, CTEND3) eines jeden Blattes die mit diesem Blatt assoziierte mittlere Kurve ist.

9. Verfahren nach Anspruch 8,
**dadurch gekennzeichnet, dass** jede Zwischenkurve (CINT1, CINT2, CINT3) eine Polynomkurve ist.

10. Verfahren nach Anspruch 7,
**dadurch gekennzeichnet, dass** das Verfahren den folgenden Schritt (STP3.4) umfasst: Bestimmen einer Trendkurve (CTEND1, CTEND2, CTEND3) pro Blatt (6) in Abhängigkeit von allen charakteristischen Punkten (85) dieses Blattes (6).

11. Verfahren nach einem der Ansprüche 1 bis 10,
**dadurch gekennzeichnet, dass** jede Trendkurve (CTEND1, CTEND2, CTEND3) eine Polynomkurve ist, die einen quadratischen Fehler minimiert.

12. Verfahren nach einem der Ansprüche 1 bis 11,
**dadurch gekennzeichnet, dass** der mindestens eine mittlere Unterschied (EC1, EC2) erhalten wird durch:
- Positionieren (STP4.1) der Trendkurven (CTEND1, CTEND2, CTEND3) in einem Koordinatensystem mit einer in Pixel ausgedrückten Ordinate,
- Bestimmen (STP4.2) der Anzahl von Pixeln, die zwei Trendkurven (CTEND1, CTEND2, CTEND3) voneinander trennen, wobei der mittlere Unterschied (EC1, EC2) gleich der Anzahl von Pixeln multipliziert mit einem gespeicherten Wert ist.

13. Verfahren zum Auswuchten eines Rotors (5), der eine Mehrzahl von rotierenden Blättern (6) umfasst,
**dadurch gekennzeichnet, dass** das Verfahren einen Schritt des Bestimmens mindestens eines Höhenunterschieds zwischen mindestens zwei Blättern durch Anwenden des Verfahrens nach einem der Ansprüche 1 bis 12 umfasst, wobei das Verfahren eine Phase (STP5) des Einstellens des Rotors (5) in Abhängigkeit von dem Höhenunterschied umfasst, die mindestens einen der folgenden Schritte umfasst: Einstellen eines Gewichtselements mindestens eines Blatts (6), Einstellen einer Ausgleichsklappe mindestens eines Blatts (6), Einstellen der Länge einer Anstellwinkelverstellstange mindestens eines Blatts (6).

14. Vorrichtung (10), **dadurch gekennzeichnet, dass** die Vorrichtung (10) einen Bildsensor (15) und einen Rechner (20) umfasst, die konfiguriert sind, um das Verfahren nach einem der Ansprüche 1 bis 12 anzuwenden.

15. Vorrichtung nach Anspruch 14,
**dadurch gekennzeichnet, dass** die Vorrichtung (10) ein tragbares Multifunktionsgerät (30) umfasst, das den Bildsensor (15) und den Rechner (20) umfasst.

## Claims

1. Method for assessing at least one height difference between at least two blades (6) of a rotor (5) comprising a plurality of these rotating blades (6),
the method comprising at least the following steps:
- using an image sensor (15), recording (STP2) successive source images (60) in an area (40) crossed by said rotating blades (6) during a measuring period, **characterised by**:
- using a calculator (20) to determine (STP3), for each blade (6), a trend curve (CTEND1, CTEND2, CTEND3) of the trajectory of this blade (6) in said area (40) depending on successive positions of a characteristic point (85) of this blade (6) using each source image (60) containing this blade (6),
- the calculator (20) assessing (STP4) at least one average difference (EC1, EC2) between one trend curve (CTEND1, CTEND2, CTEND3) and another trend curve (CTEND1, CTEND2, CTEND3), said height difference being the image of said average difference (EC1, EC2).

2. Method according to claim 1, **characterised in that** said method comprises a step of said source images (60) being stabilised (STP2.2) by an image processing algorithm with said calculator (20) before said image analysis.

3. Method according to any of claims 1 to 2, **characterised in that** said method comprises the following steps (STP3.1):
- analysing (STP3.1.1) said source images (60) with the calculator (20) to identify the source images containing a blade (6),
- identifying (STP3.1.2), in each source image containing a blade (6), the specific blade visible on this source image.

4. Method according to claim 3,
**characterised in that** said analysis is carried out image by image.

5. Method according to any of claims 3 to 4,
**characterised in that** at least one blade (6) comprises a mark (50) which is individual in order for it to be distinguished from the other blades (6), said identification (STP3.1.2) in each source image (60) containing a blade (6) of the specific blade visible in this source image comprising a step of tracking source images containing said mark (50) and associating these source images containing said mark (50) with the blade (6) bearing the mark (50).

6. Method according to any of claims 1 to 5,
**characterised in that** each blade has a shape delimited by a first section (96) realising the leading edge of the blade as well as a second section (97) realising the trailing edge of the blade and an end section (98), said characteristic point (85) of each blade being located at the intersection between the first section (96) and the end section (98) or between the second section (97) and the end section (98).

7. Method according to any of claims 1 to 6,
**characterised in that**, to carry out said determination (STP3) of a trend curve for each blade, the method comprises the following steps for each source image containing a blade:
- extracting (STP3.2) a shape representing the blade from the source image containing a blade,
- calculating (STP3.3) coordinates of the characteristic point of said shape in a twodimensional track (85).

8. Method according to claim 7, **characterised in that** said source images contain alternatively a succession of several source images (102-104, 108-110, 115-117) containing the same blade and a succession of several source images (101, 105-107, 111-114, 118-120) not containing a blade, the method comprising the following steps:
- for each succession of several source images containing the same blade, determining (STP3.3.1) an intermediate curve (CINT1, CINT2, CINT3) associated with a blade (6) from characteristic points (85) determined by analysing source images of this suite,
- determining (STP3.3.2) an average curve equal to the average of the intermediate curves (CINT1, CINT2, CINT3) associated with a blade, the trend curve (CTEND1, CTEND2, CTEND3) of each blade being the average curve associated with this blade.

9. Method according to claim 8,
**characterised in that** each intermediate curve (CINT1, CINT2, CINT3) is a polynomial curve.

10. Method according to claim 7,
**characterised in that** the method comprises the following step (STP3.4): determining a trend curve (CTEND1, CTEND2, CTEND3) by blade (6) depending on all the characteristic points (85) of this blade (6).

11. Method according to any of claims 1 to 10,
**characterised in that** each trend curve (CTEND1, CTEND2, CTEND3) is a polynomial curve minimising a mean square error.

12. Method according to any of claims 1 to 11,
**characterised in that** said at least one average difference (EC1, EC2) is obtained:
- by positioning (STP4.1) said trend curves (CTEND1, CTEND2, CTEND3) in a tracker having an ordinate expressed in pixels,
- by determining (STP4.2) the number of pixels separating two trend curves (CTEND1, CTEND2, CTEND3), said average difference (EC1, EC2) being equal to the number of pixels multiplied by a stored value.

13. Method for balancing a rotor (5) comprising a plurality of rotating blades (6), **characterised in that** said method comprises a step of determining at least one difference in height between at least two blades by applying the method according to any of claims 1 to 12, said method comprising a phase (STP5) of adjusting the rotor (5) depending on said height difference comprising at least one of the following steps:
adjusting a weighing element of at least one blade (6), adjusting a tab of at least one blade (6), adjusting the length of a step of at least one blade (6).

14. Device (10),
**characterised in that** said device (10) comprises an image sensor (15) and a calculator (20) configured to apply the method according to any of claims 1 to 12.

15. Device according to claim 14, **characterised in that** said device (10) comprises a portable multifunction apparatus (30) including said image sensor (15) and said calculator (20).
